(19) Europäisches Patentamt
European Patent Office
Office européen des brevets

(11) **EP 3 325 256 B1**

(12) **EUROPÄISCHE PATENTSCHRIFT**

(45) Veröffentlichungstag und Bekanntmachung des Hinweises auf die Patenterteilung:
**05.06.2019 Patentblatt 2019/23**

(21) Anmeldenummer: **16750403.4**

(22) Anmeldetag: **22.07.2016**

(51) Int Cl.:
**B29C 70/52** *(2006.01)*   **B29C 53/68** *(2006.01)*

(86) Internationale Anmeldenummer:
**PCT/EP2016/067487**

(87) Internationale Veröffentlichungsnummer:
**WO 2017/016995 (02.02.2017 Gazette 2017/05)**

(54) **VORRICHTUNG UND VERFAHREN ZUR FERTIGUNG EINES FASERVERSTÄRKTEN STRANGPROFILS**

APPARATUS AND METHOD FOR PRODUCING A FIBRE-REINFORCED PULTRUDED PROFILE

DISPOSITIF ET PROCÉDÉ DE FABRICATION D'UNE BARRE PROFILÉE RENFORCÉE PAR UNE FIBRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.07.2015 DE 102015214076**
**21.07.2016 DE 102016213353**

(43) Veröffentlichungstag der Anmeldung:
**30.05.2018 Patentblatt 2018/22**

(73) Patentinhaber: **BASF SE**
**67056 Ludwigshafen am Rhein (DE)**

(72) Erfinder:
• **DAUN, Gregor**
**69151 Neckargemuend (DE)**
• **WINDELER, Ingo**
**49377 Vechta (DE)**
• **WUCHERPFENNIG, Jan**
**49448 Brockum (DE)**

(74) Vertreter: **BASF IP Association**
**BASF SE**
**G-FLP-C006**
**67056 Ludwigshafen (DE)**

(56) Entgegenhaltungen:
**EP-A2- 0 854 029      DE-A1- 2 150 553**
**GB-A- 1 299 878      JP-B2- 3 641 812**
**NL-A- 7 312 450      US-A- 5 811 051**

**Beschreibung**

Die Erfindung betrifft eine Vorrichtung zur Fertigung bzw. Herstellung eines faserverstärkten Strangprofils umfassend eine Zieheinrichtung zum Ziehen eines strangförmigen Werkstückes durch die Vorrichtung, mindestens eine um die Strangachse drehbar angeordnete Faserspule, die einen Spulenkern aufweist, um den eine Faser gewickelt ist, wobei die Faser dazu vorgesehen ist, auf der Oberfläche des Werkstücks abgelegt zu werden, und mindestens eine um die Strangachse drehbar angeordnete Führungseinrichtung, die die von der Faserspule abgewickelte Faser auf das Werkstück lenkt. Weiterhin betrifft die Erfindung eine Strangwickelanlage, die mehrere der genannten Vorrichtungen umfasst, sowie ein Verfahren zur Herstellung von faserverstärkten Strangprofilen in einer solchen Vorrichtung.

Faserverstärkte Werkstoffe (Faserverbundwerkstoffe) enthalten als wesentliche Komponenten Fasern als Verstärkungsmaterial und ein Matrixsystem, in das die Fasern eingebettet sind. Typischerweise basieren die Fasern auf Glas, Kohlenstoff, Aramid oder Nylon. Als Matrixsysteme kommen meist duroplastische Polymere, beispielsweise Polyesterharze, Vinylesterharze oder Epoxidharze, oder thermoplastische Polymere wie Polyamide, Polypropylene oder Polyethylene zum Einsatz.

Zur Herstellung von faserverstärkten Strangprofilen sind verschiedene Verfahren bekannt. Beim typischen Strangziehverfahren (Pultrusionsverfahren) werden die Fasern von Spulen abgerollt, mit dem Matrixsystem getränkt oder anderweitig benetzt, in die gewünschte Profilform gebracht und ausgehärtet. Dabei können die Fasern selbst die Profilform bilden oder sie können auf einen Grundkörper aufgebracht werden. Das Verfahren wird üblicherweise kontinuierlich durchgeführt, indem das durch die getränkten Fasern gebildete Werkstück kontinuierlich durch die Anlage gezogen wird.

Beim sogenannten Filament Winding-Verfahren werden die Fasern ebenfalls von Spulen abgerollt und mit dem Matrixsystem getränkt oder anderweitig benetzt. Hierbei handelt es sich allerdings um ein diskontinuierliches Verfahren, bei dem ein zu ummantelnder Kern oder Grundkörper rotiert und die Fasern durch eine axiale Hin- und Herbewegung solange auf das Werkstück geführt und auf dieses aufgewickelt werden, bis die gewünschte Dicke der Faser-KunststoffSchicht erreicht ist.

Das Pullwinding-Verfahren stellt eine Kombination des Strangziehens und Filament Winding dar. Ein strangförmiges Werkstück wird durch die Anlage gezogen, während Faserspulen um das Werkstück rotieren, die Fasern getränkt oder benetzt werden und die benetzten Fasern auf dem Werkstück abgelegt werden. Dabei kann die Benetzung auch erst auf dem Werkstück stattfinden. Das strangförmige Werkstück kann ein vorgeformter Grundkörper sein, beispielsweise ein Rohr, es kann aber auch durch Fasern gebildet werden, die in einer ersten Stufe z.B. im Strangziehverfahren oder Pullwindingverfahren in eine Profilform gebracht werden.

Je nach herzustellendem Strangprofil ist das Pullwinding-Verfahren besonders wirtschaftlich, da es die kontinuierliche Fertigung des Strangziehens mit der Flexibilität des Filament Winding, insbesondere im Hinblick auf die Anzahl und Orientierung der einzelnen Lagen an Fasern, verbindet. Nachteilig an diesem Verfahren ist allerdings, dass durch die Rotation der Faserspulen, die üblicherweise auf Karussell-ähnlichen Konstruktionen angebracht sind, im Betrieb hohe Fliehkräfte entstehen. Dies führt zu hohen mechanischen Belastungen und Verschleiß der Anlage sowie zu Sicherheitsproblemen hinsichtlich des Schutzes der Anlagenbediener vor sich eventuell lösenden Spulen. In der Praxis wird diesem Problem begegnet, indem die Rotationsgeschwindigkeit des Karussells oder die Anzahl und Größe der Faserspulen auf dem Karussell begrenzt werden. Beide Maßnahmen bedeuten eine Beschränkung der Herstellkapazität der Anlage.

JP3641812B offenbart einen Tapewinder, bei dem Fasern von Spulen abgewickelt und zu einem Faserbündel gewickelt werden. Das Faserbündel wird durch ein Bad mit einer Harzflüssigkeit gezogen. Das Faserbündel wird dann mit einem von einer Führungsvorrichtung stammenden Band oder Tape umwickelt, in einem Ofen gehärtet und anschließend wird das Band wieder abgewickelt.

Es stellte sich die Aufgabe, bekannte Anlagen und Verfahren zur Herstellung von faserverstärkten Strangprofilen dahingehend weiterzubilden, dass die konzeptionell bedingte Herstellkapazität erhöht wird, ohne Kompromisse im Hinblick auf die Anlagensicherheit eingehen zu müssen. Diese Aufgabe wird erfindungsgemäß gelöst durch eine Vorrichtung zur Fertigung eines faserverstärkten Strangprofils gemäß Anspruch 1 sowie ein Verfahren zur Herstellung von faserverstärkten Strangprofilen gemäß Anspruch 14. Vorteilhafte Ausgestaltungen sind in den Ansprüchen 2 bis 13 angegeben.

Die erfindungsgemäße Vorrichtung zur Fertigung eines faserverstärkten Strangprofils umfasst eine Zieheinrichtung zum Ziehen eines strangförmigen Werkstückes durch die Vorrichtung, mindestens eine um die Strangachse drehbar angeordnete Faserspule, die einen Spulenkern aufweist, um den eine Faser gewickelt ist, wobei die Faser dazu vorgesehen ist, auf der Oberfläche des Werkstücks abgelegt zu werden, und mindestens eine um die Strangachse drehbar angeordnete Führungseinrichtung, die die von der Faserspule abgewickelte Faser auf das Werkstück lenkt. Erfindungsgemäß weist der Spulenkern der Faserspule eine Durchgangsbohrung auf, durch die das Werkstück geführt ist, und weist die Vorrichtung eine Tränkeinrichtung auf, die Mittel zur Benetzung der Fasern mit einem Tränkmittel aufweist.

Als "Strangprofil" wird hier und im Folgenden das fertig umwickelte Werkstück bezeichnet, währen der Begriff "Werkstück" in allen Stadien des Durchlaufens der erfindungsgemäßen Vorrichtung verwendet wird. Das Werkstück kann vorab auf eine bestimmte Länge zugeschnitten sein, es kann aber auch als Schlauchware in zunächst unbestimmter Länge der Vorrichtung zugeführt werden. Das Querschnittsprofil des Werkstücks kann über seine Länge konstant oder variabel sein. Beschränkt ist das Querschnittsprofil lediglich dadurch, dass seine größte Ausdehnung kleiner sein muss als der Querschnitt der Durchgangsbohrung des Spulenkerns der Faserspule. Das Werkstück kann hohl oder kompakt sein. Dabei kann es sich - wie oben zum Pullwinding-Verfahren beschrieben - um einen vorgeformten Grundkörper handeln oder um ein Gebilde aus Fasern, die in einer ersten Stufe in eine Profilform gebracht worden sind.

Als Strangachse wird die Achse bezeichnet, die sich dadurch ergibt, dass das Werkstück durch die Vorrichtung gezogen wird. Vorzugsweise wird das Werkstück innerhalb der Vorrichtung nicht umgelenkt, sodass sich pro Vorrichtung nur eine definierte Strangachse ergibt.

Ziehvorrichtungen sind aus dem Stand der Technik bekannt, beispielsweise Raupenabzug, Schrittgreifer, Geradeaus-Ziehmaschinen, Riemenscheiben oder Rollenziehanlagen.

Erfindungsgemäß umfasst die Vorrichtung mindestens eine Faserspule, die einen Spulenkern aufweist, um den eine Faser gewickelt ist. Der Spulenkern weist eine Durchgangsbohrung auf, durch die das Werkstück geführt ist. Zur Abwicklung der Faser im Betrieb rotiert die Faserspule um das Werkstück. Im Vergleich zum Stand der Technik des Pullwinding-Verfahrens, bei dem die Faserspule auf einer Karussell-ähnlichen Konstruktion angebracht ist, die ihrerseits um das Werkstück rotiert, werden konstruktionsbedingt bei der erfindungsgemäßen Vorrichtung die Fliehkräfte und das Trägheitsmoment der Faserspule in Bezug auf die Strangachse deutlich reduziert.

Erfindungsgemäß weist die Vorrichtung eine Tränkeinrichtung auf. Die Tränkeinrichtung weist Mittel zur Benetzung der Fasern mit einem Tränkmittel auf. Unter einem Tränkmittel ist dabei grundsätzlich jede Substanz zu verstehen, die eine Konsolidierung der Fasern bewirkt. Als Tränkmittel wird im Rahmen der vorliegenden Erfindung insbesondere eine Flüssigkeit verwendet. Alternativ kann das Tränkmittel eine Matrix-Flüssigkeit, wie beispielsweise ein reaktionsfähiges, flüssiges Duroplast-System auf Basis von beispielsweise Polyester, Vinylester, Epoxidharz, oder ein reaktionsfähiges Thermoplast-System auf Basis von Caprolactam, Polyacryl, oder eine Thermoplast-Schmelze beispielsweise auf Basis von Polypropylen, Polyethylen, Polyamid sein.

Wenn im Folgenden von Eigenschaften der Faserspulen (im Plural) die Rede ist, sind damit ebenso Eigenschaften der mindestens einen Faserspule gemeint.

Die Faserspulen können unterschiedlich ausgestaltet sein, beispielsweise im Hinblick auf ihre Abmessungen und das Fassungsvermögen an Faser, die auf der Spule aufgewickelt ist. In einer bevorzugten Variante der erfindungsgemäßen Vorrichtung werden schmale Faserspulen eingesetzt, bei denen das Verhältnis des maximalen Außendurchmessers zur axialen Breite der Faserspule größer als zwei ist.

Vorzugsweise ist die Durchgangsbohrung zentrisch im Spulenkern angeordnet.

Die erfindungsgemäße Anordnung der Faserspulen um die Strangachse erlaubt hinsichtlich der Anzahl an Faserspulen einen modularen und erweiterbaren Aufbau. In einer bevorzugten Ausgestaltung der Vorrichtung sind mindestens zwei Faserspulen mit Durchgangsbohrungen entlang der Strangachse hintereinander angeordnet, und es ist eine Umlenkeinrichtung vorhanden, über die die von den jeweiligen Faserspulen abgewickelten Fasern zur Führungseinrichtung geführt sind.

In einer weiterhin bevorzugten Ausgestaltung der erfindungsgemäßen Vorrichtung sind mindestens eine Faserspule oder mehrere Faserspulen auf einer antreibbaren Hohlwelle angeordnet, und das Werkstück ist durch die Hohlwelle geführt. Im Fall von mehreren Faserspulen dient die Hohlwelle als gemeinsame Lagerung der Faserspulen. Die Umlenkeinrichtung kann dabei so ausgebildet sein, dass die von den jeweiligen Faserspulen abgewickelten Fasern innerhalb oder außerhalb der Hohlwelle zur Führungseinrichtung geführt sind.

Vorzugsweise sind die einzelnen Faserspulen relativ zur Hohlwelle beweglich gelagert. Dies ermöglicht unterschiedliche Winkelgeschwindigkeiten der Faserspulen in Abhängigkeit des Durchmessers der noch vorhandenen Faserwicklung.

In einer anderen bevorzugten Ausführungsform ist die Hohlwelle starr gelagert, und die Faserspulen sowie die Führungseinrichtung sind auf der Hohlwelle antreibbar gelagert.

Bevorzugt befindet sich innerhalb der Hohlwelle ein Schutzrohr, durch das das Werkstück geführt ist. Das Schutzrohr schirmt das Werkstück von den rotierenden Teilen der Vorrichtung ab und beugt dadurch möglichen Beeinträchtigungen des Werkstücks vor. Besonders vorteilhaft ist eine Anordnung, bei der das Schutzrohr an einem Ende starr befestigt ist, sodass es selbst keine Rotationsbewegung ausführen kann. Der Einsatz eines Schutzrohres ist sowohl bei einer Vorrichtung mit Hohlwelle wie bei einer Vorrichtung ohne Hohlwelle gleichermaßen vorteilhaft.

Erfindungsgemäß umfasst die Vorrichtung eine um die Strangachse drehbar angeordnete Führungseinrichtung, die die von der Faserspule abgewickelte Faser auf das Werkstück lenkt. Bei mehreren von der Faserspule oder den Faserspulen kommenden Fasern lenkt die Führungseinrichtung bevorzugt alle Fasern auf das Werkstück. Die Führungseinrichtung dient dazu, die Fasern in einem vorgegebenen Winkel auf dem Werkstück abzulegen. Dieser Winkel ist von mehreren Parametern abhängig, vorrangig von dem Verhältnis zwischen der Geschwindigkeit, mit der das Werkstück durch die Vorrichtung gezogen wird, der Winkelgeschwindigkeit, mit der die Führungseinrichtung um die Strangachse rotiert, und dem Wickelradius als dem Abstand zwischen der bereits abgelegten Faser und der Rotationsachse.

Die Führungseinrichtung kann unterschiedlich gestaltet sein und kann mehrere Einzelbauteile umfassen.

In einer vorteilhaften Ausführungsform umfasst die Führungseinrichtung einen Ring, über den die Fasern geführt sind. Die Fasern können dabei lose über den Ring geführt sein. Der Ring kann in seiner Mantelfläche und/oder seiner Stirnfläche Bohrungen aufweisen, durch die die Fasern geführt sind. Diese Ausführung ist für manche Anwendungen bevorzugt, da im Vergleich zur losen Führung die Fasern auf bestimmte Austrittspunkte über den Ringumfang verteilt festgelegt sind.

In einer weiteren vorteilhaften Ausführungsform umfasst die Führungseinrichtung mindestens zwei Ringe, deren Außendurchmesser unterschiedlich sind. Die Ringe können ineinander oder hintereinander angeordnet sein. Die Fasern werden derart über die mindestens zwei Ringe geführt, dass sich aufgrund der Reibung eine Faserspannung einstellt, was einer definierten Ablage der Fasern auf dem Werkstück und einem hohen Faservolumenanteil zuträglich ist.

In einer bevorzugten Ausgestaltung ist die Führungseinrichtung fest mit der Hohlwelle verbunden, sodass die Winkelgeschwindigkeit der Führungseinrichtung derjenigen der Hohlwelle entspricht.

In einer weiterhin bevorzugten Ausgestaltung der erfindungsgemäßen Vorrichtung ist mindestens eine weitere Faserspule in radialer Richtung hinter einer anderen Faserspule und relativ zu dieser drehbar angeordnet. Diese radiale Hintereinanderschaltung von Faserspulen erlaubt es, die Anzahl an zur Verfügung stehenden Fasern pro axialem Längenabschnitt zu erhöhen. Vorzugsweise sind alle derart hintereinander geschalteten Faserspulen konzentrisch zur Strangachse angeordnet.

In einer Fortbildung dieser Anordnung ist bevorzugt mindestens eine weitere Führungseinrichtung drehbar um die Strangachse angeordnet ist, die die von der weiteren Faserspule abgewickelte Faser auf das Werkstück lenkt. Die weitere Führungseinrichtung kann synchron mit der ersten Führungseinrichtung betrieben werden. Alternativ kann die weitere Führungseinrichtung auch asynchron zur ersten Führungseinrichtung betrieben werden, sowohl im Hinblick auf die Winkelgeschwindigkeit als auch die Drehrichtung. Dadurch lässt sich in einem Arbeitsgang eine Vielzahl von Mustern der Ablage der Fasern auf dem Werkstück realisieren.

In einer vorteilhaften Ausgestaltung ist die Tränkeinrichtung zwischen der mindestens einen Faserspule und der Führungseinrichtung um die Strangachse drehbar angeordnet und weist die Mittel zur Führung der Fasern durch die Tränkeinrichtung auf.

Tränkeinrichtungen zur Benetzung von Fasern sind aus den klassischen Pullwinding-Verfahren bekannt, beispielsweise durch Betropfen oder Besprühen der Fasern oder durch Benetzen der trockenen Fasern, indem sie auf ein bereits getränktes Werkstück aufgebracht werden.

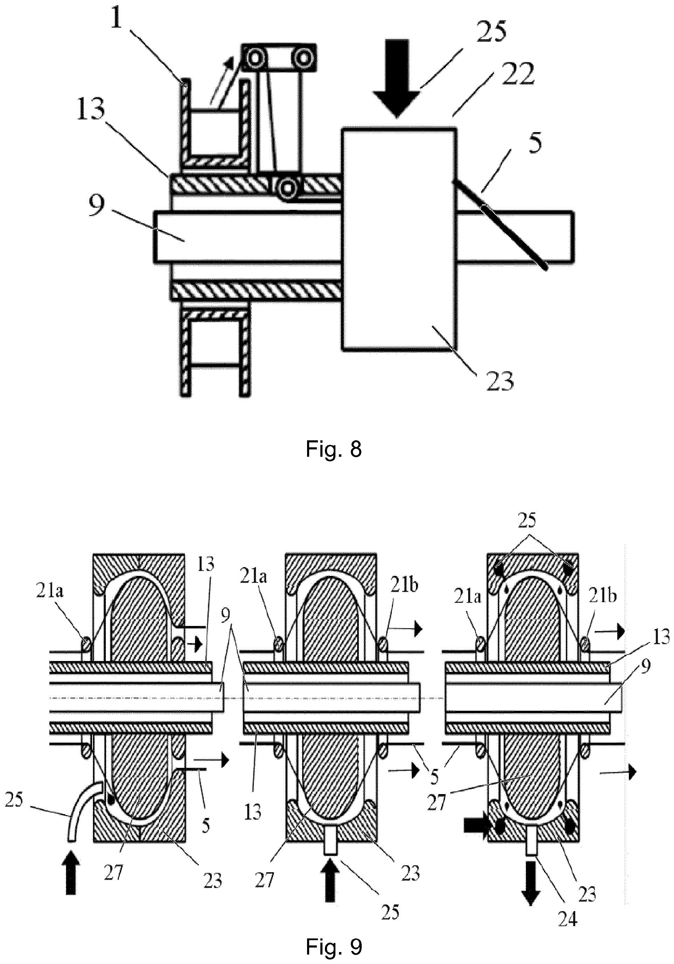

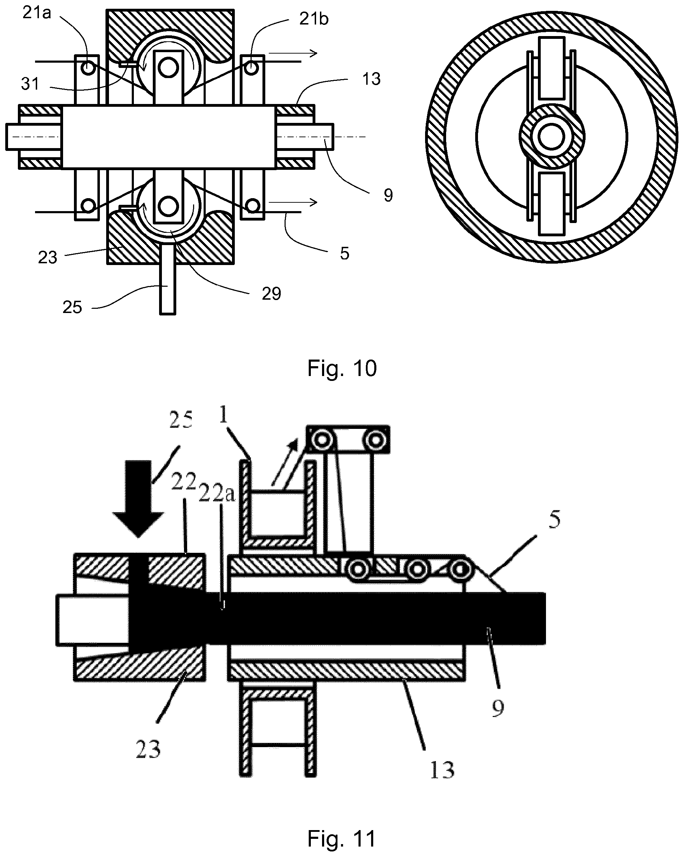

In einer bevorzugten Ausgestaltung der Erfindung umfasst die Tränkeinrichtung mindestens ein um die Strangachse rotierendes Bauteil sowie mindestens ein ortsfest angeordnetes Bauteil. Alternativ kann die Tränkeinrichtung mindestens ein um die Strangachse rotierendes, in Bezug auf den Faden inneres Bauteil sowie mindestens ein weiteres mit dem rotierenden Bauteil gemeinsam rotierendes, in Bezug auf den Faden äußeres Bauteil aufweisen. Besonders bevorzugt weist diese Tränkeinrichtung im Inneren eine Form auf, in der sich ein Tränkmittelfilm ausbilden kann, sodass eine definierte Benetzung der Fasern sichergestellt werden kann. Beispiele derartiger vorteilhafter Ausgestaltungen sind in Fig. 9 und Fig. 10 wiedergegeben.

Alternativ kann die Tränkeinrichtung in Ziehrichtung des Werkstücks gesehen vor bzw. stromaufwärts eines Ablagepunkts der Faser auf der Oberfläche des Werkstücks angeordnet sein. Dadurch lässt sich das Werkstück mit dem Tränkmittel, wie beispielsweise einer Flüssigkeit, benetzen und die Faser auf das bereits benetzte Werkstück ablegen. Dabei wird die Faser von innen her durch das nasse Werkstück getränkt. Unter dem Ablagepunkt der Faser auf der Oberfläche des Werkstücks ist derjenige Punkt auf der Oberfläche des Werkstücks zu verstehen, an dem die Faser auf das Werkstück abgelegt wird. Das Werkstück wird in axialer Richtung relativ zu den übrigen Bauteilen bewegt. Von außen betrachtet ist der Ablagepunkt daher bezogen auf die axiale Position ortsfest.

Alternativ kann die Tränkeinrichtung in Ziehrichtung des Werkstücks gesehen nach bzw. stromabwärts der Führungseinrichtung angeordnet sein. Dadurch lässt sich die bereits auf dem Werkstück abgelegte Faser benetzen. Dabei wird die Faser von außen her getränkt. Eine solche Anordnung verhindert ein Verschleppen des Tränkmittels in die Führungseinrichtung.

Eine Strangwickelanlage stellt eine bevorzugte Ausgestaltung dar, bei der mindestens zwei erfindungsgemäße Vorrichtungen modular hintereinander angeordnet sind, sodass ein aus der ersten Vorrichtung austretendes strangförmiges Werkstück durch die zweite Vorrichtung geführt wird. Es ist nicht erforderlich, dass jede Vorrichtung eine eigene Zieheinrichtung umfasst. Die Strangwickelanlage insgesamt weist aber mindestens eine Zieheinrichtung zum Ziehen eines strangförmigen Werkstückes auf.

Je nach Anforderung an das fertige Strangprofil ist es erforderlich, unterschiedliche Faserarten oder Faserstärken in unterschiedlicher Orientierung und Lagenstärke auf das zu umwickelnde Werkstück aufzubringen. Gegebenenfalls ist auch der Einsatz verschiedener Tränkmittel erforderlich. Der modulare Aufbau der Strangwickelanlage ermöglicht es, diese Anforderungen zu erfüllen und mit wenigen Vorrichtungen eine Vielzahl an unterschiedlichen Strangprofilen herzustellen.

In einer bevorzugten Ausgestaltung der Strangwickelanlage sind aufeinander folgende Vorrichtungen derart eingerichtet, dass die Drehrichtung der jeweiligen Führungseinrichtungen und/ oder das Verhältnis zwischen Winkelgeschwindigkeit und axialer Geschwindigkeit des Werkstücks unterschiedlich sind.

In einer weiteren bevorzugten Ausführungsform der Strangwickelanlage ist mindestens eine Umlenkvorrichtung zwischen zwei erfindungsgemäßen Vorrichtungen angeordnet, die das aus der ersten Vorrichtung austretende Werkstück umlenkt, sodass die Strangachse der zweiten Vorrichtung nicht parallel zur Strangachse der ersten Vorrichtung ist. Dadurch werden eine flexible Anordnung der einzelnen Vorrichtungen sowie eine optimale Ausnutzung des zu Verfügung stehenden Raumes ermöglicht.

In einer vorteilhaften Fortbildung der Erfindung ist die Vorrichtung als Modul in einem Gehäuse aufgenommen, beispielsweise in eine Rahmenkonstruktion. Dies ermöglicht eine platzsparende Anordnung mehrerer Vorrichtungs-Module nebeneinander oder übereinander in Form eines stapelbaren Baukastensystems.

Ein weiterer Gegenstand der Erfindung ist ein Verfahren zur Herstellung eines faserverstärkten Strangprofils, bei dem ein strangförmiges Werkstück mittels einer Zieheinrichtung durch eine Vorrichtung gezogen wird, mindestens eine Faser vom Spulenkern mindestens einer drehbar um die Strangachse angeordneten Faserspule abgewickelt wird und von der Faserspule kommend über mindestens eine drehbar um die Strangachse angeordnete Führungseinrichtung auf das Werkstück gelenkt und auf dem Werkstück abgelegt wird, wobei das Werkstück durch eine Durchgangsbohrung im Spulenkern der mindestens einen Faserspule geführt wird und die Faser mittels einer Tränkeinrichtung mit einem Tränkmittel, insbesondere einer Flüssigkeit, benetzt wird.

Üblicherweise umfasst ein faserverstärktes Strangprofil eine Vielzahl an Lagen von Fasern. Die Herstellung derartiger Strangprofile lässt sich mit dem erfindungsgemäßen Verfahren auf mehrere Arten bewerkstelligen.

In einer bevorzugten Ausgestaltung des Verfahrens wird das zu umwickelnde Werkstück durch mehrere hintereinandergeschaltete Vorrichtungen gezogen, wobei in jeder Vorrichtung mindestens eine Lage an Fasern aufgebracht wird. Dieses Verfahren wird als "kontinuierlich" bezeichnet und eignet sich insbesondere für sogenannte "Endlosware", die erst als fertiges Strangprofil auf ein definiertes Maß abgelängt wird.

In einer weiteren bevorzugten Ausgestaltung des Verfahrens wird ein vorab auf eine bestimmte Länge begrenztes Werkstück mehrfach durch eine oder mehrere Vorrichtungen gezogen, um die Vielzahl an Lagen von Fasern aufzubringen. Dieses Verfahren wird als "diskontinuierlich" bezeichnet.

In besonders bevorzugter Ausgestaltung des diskontinuierlichen Verfahrens sind mindestens zwei Zieheinrichtungen vorhanden, um die Richtung, in die das Werkstück gezogen wird, möglichst schnell wechseln zu können. Weiterhin ist die Führungseinrichtung derart gestaltet, dass die von der mindestens einen Faserspule kommenden Fasern sowohl in die eine als auch in die andere Richtung auf dem Werkstück abgelegt werden können.

Bei aus dem Stand der Technik bekannten Pullwinding-Anlagen sind die Faserspulen bezüglich der Strangachse exzentrisch auf einer Karussell-ähnlichen Konstruktion angeordnet. Je mehr Faserspulen vorhanden sind und je größer das Faser-Fassungsvermögen der einzelnen Faserspulen ist, umso größer sind die Zentrifugalkräfte, die im Betrieb auf die Anlage wirken. Wie eingangs erwähnt begrenzt dies die Herstellkapazität bekannter Anlagen. Im Gegensatz dazu werden bei der erfindungsgemäßen Vorrichtung die Zentrifugalkräfte, die auf die Faserspulen wirken, sowie das Massenträgheitsmoment der Faserspulen signifikant reduziert. Dadurch lassen sich die Herstellkapazität entsprechend steigern sowie die Masse der Anlage verringern.

Ein weiterer Vorteil der Erfindung ist darin zu sehen, dass die Gefahr, die von den rotierenden Faserspulen nach dem Stand der Technik ausgeht, bei der erfindungsgemäßen Vorrichtung vermieden wird, da sich hier keine Faserspulen während der Rotation aus ihrer Halterung lösen können.

Weiterhin lässt sich die Anzahl der Spulen bei der erfindungsgemäßen Vorrichtung mit nur geringem Umbauaufwand den geforderten Gegebenheiten anpassen. Die erfindungsgemäße Vorrichtung ist damit deutlich flexibler einstellbar als bekannte Pullwinding-Anlagen, bei denen die Anzahl der Faserspulen aufgrund der Gestaltung des Karussells festgelegt ist.

Die Erfindung wird im Folgenden mit Verweis auf die Zeichnungen näher erläutert. Die Zeichnungen sind als Prinzipdarstellungen zu verstehen. Sie stellen keine Beschränkung der Erfindung dar, beispielsweise im Hinblick auf konkrete Abmessungen oder Ausgestaltungsvarianten.

Es zeigen:

Fig. 1:    ein Karussell mit Faserspulen gemäß Stand der Technik

Fig. 2:    eine Ansicht und Längsschnitt eines Karussells gemäß Fig. 1

Fig. 3:    Beispiele erfindungsgemäßer Anordnungen von Faserspulen

Fig. 4:    ein Beispiel einer einzelnen erfindungsgemäßen Faserspule

Fig. 5:    ein Beispiel einer weiteren Ausführungsform einer erfindungsgemäßen Faserspule

Fig. 6:    ein Beispiel einer erfindungsgemäßen Anordnung mit vier Faserspulen

Fig. 7:    ein Beispiel einer weiteren erfindungsgemäßen Anordnung mit vier Faserspulen

Fig. 8:    eine vereinfachte schematische Darstellung einer Ausführungsform einer Tränkeinrichtung

Fig. 9:　　Varianten einer Tränkeinrichtung

Fig. 10:　eine Variante einer Tränkeinrichtung

Fig. 11:　eine vereinfachte schematische Darstellung einer weiteren Ausführungsform einer Tränkeinrichtung

Fig. 12:　eine vereinfachte schematische Darstellung einer weiteren Ausführungsform einer Tränkeinrichtung

Fig. 13:　schematisch zwei mögliche Stellungen einer Bremse zur Bildung bzw. Aufrechterhaltung der Faserspannung

Fig. 14:　einen Vergleich der Zentrifugalkräfte

Fig. 15:　einen Vergleich der Massenträgheitsmomente

Liste der verwendeten Bezugszeichen

| 1 | Faserspule |
|---|---|
| 3 | Karussell |
| 5 | Faser / Fasern |
| 7 | Führungseinrichtung |
| 9 | Werkstück |
| 10 | Zieheinrichtung |
| 11 | Faservorrat auf der Faserspule |
| 13 | Hohlwelle |
| 14 | Öffnung |
| 15 | Lagerbock |
| 17 | Durchführung |
| 19 | Rahmen für Faserspulen |
| 21 | Umlenkrollen / Umlenkungen / Umlenkungseinrichtung |
| 22 | Tränkeinrichtung |
| 22a | Tränkmittel |
| 23 | Grundkörper der Tränkeinrichtung |
| 24 | Ablauf |
| 25 | Zuleitung |
| 27 | Innenkörper der Tränkeinrichtung |
| 29 | Tränkrollen |
| 31 | Abstreifer |

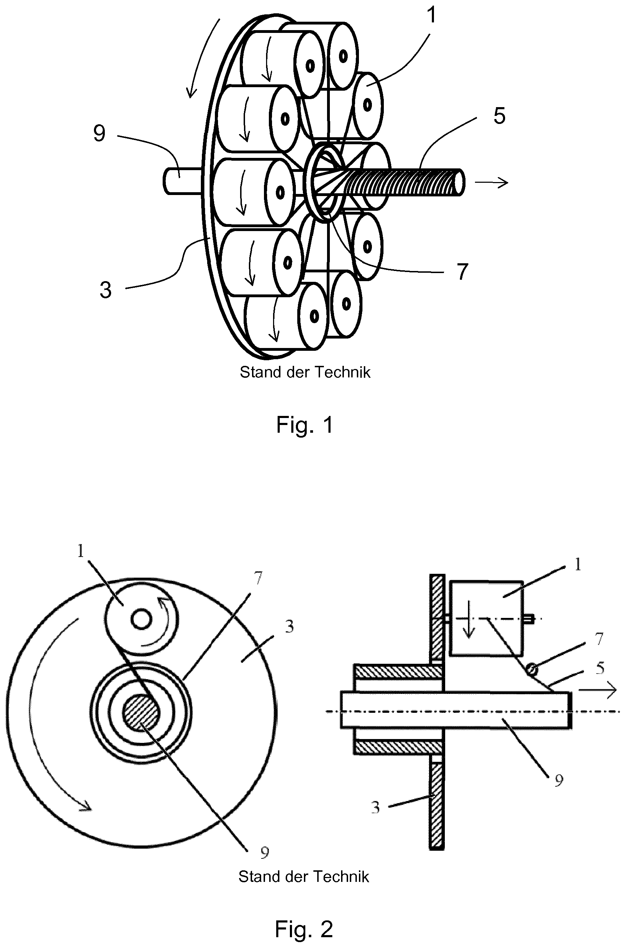

Fig. 1 zeigt einen Ausschnitt aus einer Anlage zur Herstellung von faserverstärkten Strangprofilen nach dem Pullwinding-Verfahren gemäß dem Stand der Technik. In diesem Beispiel sind zehn Faserspulen 1 jeweils unabhängig voneinander drehbar auf der Stirnfläche eines Karussells 3 angeordnet. Die von den Spulen abgewickelten Fasern 5 werden über eine Führungseinrichtung 7 auf das zu umwickelnde Werkstück 9 gelenkt, das durch eine zentrale Öffnung im Karussell geführt ist. Das Werkstück 9 wird in dieser Darstellung von links nach rechts durch die Anlage gezogen, während das Karussell 3 in der dargestellten Pfeilrichtung angetrieben wird. Das Verhältnis zwischen der axialen Geschwindigkeit des Werkstücks und der Winkelgeschwindigkeit des Karussells multipliziert mit dem Werkstückradius bestimmt den Winkel, unter dem die Fasern auf dem Werkstück abgelegt werden. In Fig. 1 nicht dargestellt sind die Benetzung der Fasern, z.B. durch eine Tränkeinrichtung, sowie weitere Bestandteile der Anlage.

In Fig. 2 sind eine Draufsicht auf das Karussell sowie ein Längsschnitt dargestellt, wobei der Übersichtlichkeit halber nur eine Faserspule abgebildet ist.

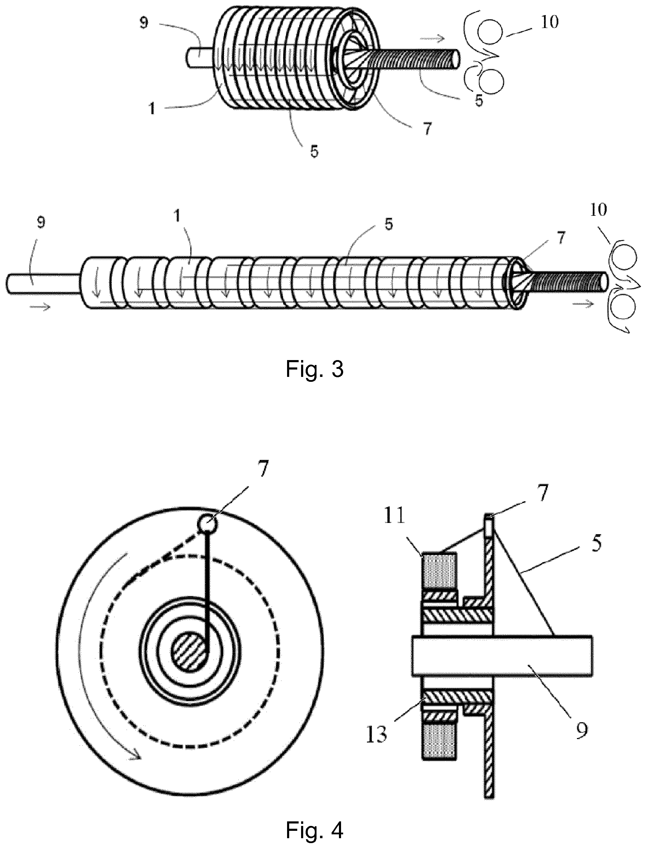

Fig. 3 zeigt beispielhaft zwei Ausführungsformen der erfindungsgemäßen Vorrichtung zur Fertigung von faserverstärkten Strangprofilen. In beiden Fällen umfasst die Vorrichtung eine Zieheinrichtung 10 zum Ziehen eines strangförmigen Werkstückes 9 durch die Vorrichtung in der durch die Pfeile angezeigten Richtung. Die Zieheinrichtung 10 selbst ist in Fig. 3 lediglich schematisch angedeutet. Weiterhin umfassen beide Ausführungsformen der erfindungsgemäßen Vorrichtung in diesem Beispiel jeweils zehn Faserspulen 1, die um die Strangachse drehbar angeordnet sind. Im oben dargestellten Beispiel handelt es sich um schmale Faserspulen 1 mit großem Durchmesser, im unten dargestellten Beispiel um breite Faserspulen 1 mit kleinem Durchmesser. Die Faserspulen 1 rotieren in der durch die Pfeile angezeigten Richtung um die Strangachse, wobei die auf den Faserspulen befindlichen Fasern 5 abgewickelt werden. Die Fasern 5 werden zu einer um die Strangachse drehbar angeordnete Führungseinrichtung 7 geführt, die die Fasern 5 auf das Werkstück 9 lenkt und dort ablegt. Im oben in Fig. 3 dargestellten Beispiel umfasst die Führungseinrichtung 7 zwei konzentrische Ringe, über die die Fasern 5 von den Faserspulen kommend zunächst von außen nach innen und dann wieder nach außen umgelenkt werden. Im unten dargestellten Beispiel umfasst die Führungseinrichtung 7 nur einen Ring. Im Gegensatz zu den aus dem Stand der Technik bekannten Anlagen wird das zu umwickelnde Werkstück 9 durch Durchgangsbohrungen in den Spulenkernen der Faserspulen 1 geführt.

In Fig. 4 ist ein Beispiel einer Ausführungsform einer Faserspule in der Draufsicht (links) und im Längsschnitt (rechts) dargestellt. Die Faserspule 1 ist auf einer antreibbaren Hohlwelle 13 angeordnet, durch die das Werkstück 9 geführt ist. Neben der Faserspule 1 mit dem Spulenkern befindet sich eine Führungseinrichtung 7, die die vom Spulenvorrat 11 abgewickelte Faser 5 über eine Öffnung auf das Werkstück 9 lenkt. Dabei ist der Spulenvorrat 11 relativ zu der Hohlwelle 13 drehbar angeordnet, beispielsweise mittels nicht näher gezeigter Lager. Die Führungseinrichtung 7 ist dahingegen mit der Hohlwelle 13 drehfest verbunden, so dass sich die Führungseinrichtung 7 mit der gleichen Drehzahl wie die Hohlwelle 13 drehen kann.

Als Faserspulen können neben den auf Spulenkerne gewickelten Spulen auch kernlose Spulen auf nachträglich eingebrachten hohlen Spannkernen verwendet werden.

Bei den oben geschilderten beispielhaften Ausführungsformen der erfindungsgemäßen Vorrichtung werden die Fasern nach außen von den Faserspulen abgewickelt, die Faserspulen haben also einen sogenannten Außenabzug. Von der Erfindung umfasst sind allerdings auch Vorrichtungen mit Faserspulen mit Innenabzug, bei denen die Faser nach innen, zum Mittelpunkt der Faserspule hin abgewickelt wird. In bevorzugten Ausführungsformen dieser Art sind auf der Hohlwelle oder um die Hohlwelle herum Spannelemente, z.B. Spannbacken oder Spannrollen, angebracht, die von der Hohlwelle weg in Richtung auf die Innenseite der Faserspule drücken. Dadurch wird sichergestellt, dass die Fasern in aufgewickeltem Zustand verbleiben und nicht zur Mitte in Richtung der Hohlwelle fallen. Zudem wird dadurch eine erwünschte Faserspannung erreicht. Mit dem Abwickeln der Fasern vergrößert sich der Innendurchmesser der verbleibenden Faserwicklung in den Spulen. Die Spannelemente sind derart ausgelegt, dass sie sich der Veränderung des Durchmessers anpassen und entsprechend weiter nach außen drücken. Dies kann beispielsweise dadurch erreicht werden, dass die Spannelemente mittels Federn gegen die Hohlwelle abgestützt sind. Die Faserspulen sind auch in dieser Ausführungsform gegenüber der Hohlwelle drehbar angeordnet, vorzugsweise dadurch, dass die Spannelemente über ein Lager gegen die Hohlwelle abgestützt sind, z.B. ein Gleitlager, Rollen- oder Kugellager. Bei dieser Ausführungsform ist ein Bremsen der Hohlwelle 13 nur von innen oder längs auf der Hohlwelle 13 möglich.

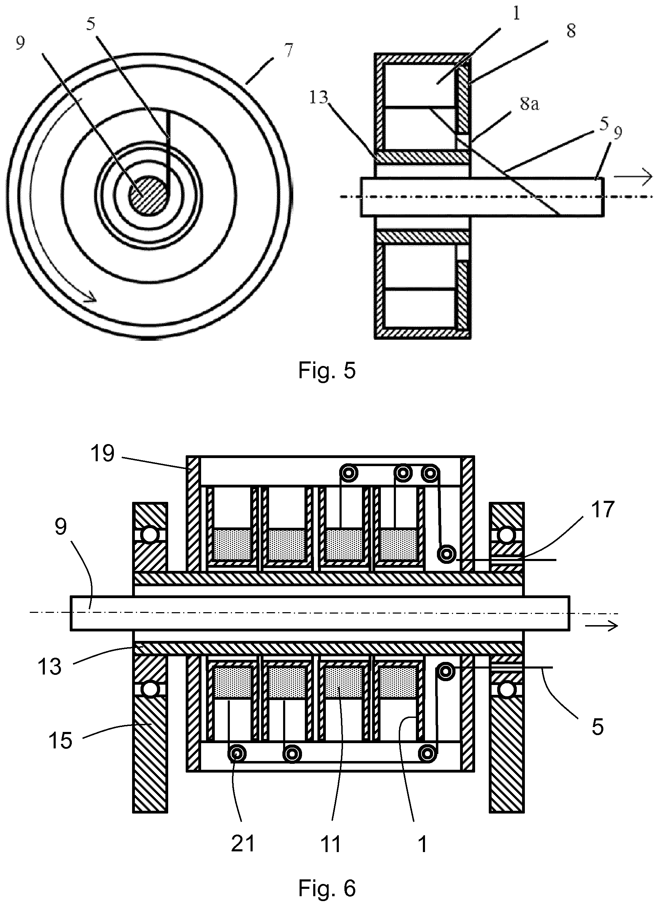

In Fig. 5 ist ein Beispiel einer weiteren Ausführungsform einer Faserspule in der Draufsicht (links) und im Längsschnitt (rechts) dargestellt. Die Faserspule 1 ist auf einer antreibbaren Hohlwelle 13 angeordnet, durch die das Werkstück 9 geführt ist. Neben der Faserspule 1 mit dem Spulenkern befindet sich eine Führungseinrichtung 7. Die Führungseinrichtung 7 ist schalenförmig oder topfförmig mit einem Deckel 8 ausgebildet und weist entsprechend in der Schnittansicht rechts einen U-förmigen Querschnitt auf. Mit anderen Worten weist die Führungseinrichtung 7 an einer Seite eine Öffnung auf, die von dem Deckel 8 verschlossen ist. Die Öffnung weist dabei in Transportrichtung des Werkstücks 9. Der Deckel 8 weist wiederum ein Loch oder eine vergleichsweise kleine Öffnung 8a auf, durch die eine Faser 5 hindurchführbar ist. Ein Spulenvorrat 11 ist im Inneren der Führungseinrichtung 7 angeordnet und befindet sich bezogen auf die Strangachse des Werkstücks 9 in einem radial äußeren Bereich der Führungseinrichtung 7. Die vom Spulenvorrat 11 abgewickelte Faser 5 wird durch die Öffnung 8a in dem Deckel 8 geführt und somit nach Umlenkung durch die Führungseinrichtung 7 auf das Werkstück 9 gelenkt.

In Fig. 6 ist ein Beispiel einer erfindungsgemäßen Anordnung mit vier Faserspulen 1 wiedergegeben. Eine Hohlwelle 13, durch die das Werkstück 9 in Pfeilrichtung gezogen wird, ist in einem Lagerbock 15 drehbar gelagert. Auf der Hohlwelle 13 ist ein Rahmen 19 für Faserspulen 1 angeordnet und fest mit der Hohlwelle 13 verbunden. Innerhalb des Rahmens 19 sind vier Faserspulen 1 angeordnet, die einzeln relativ zur Hohlwelle 13 drehbar sind. Die von den jeweiligen sich auf den Faserspulen befindlichen Faservorräten 11 kommenden Fasern 5 werden nach außen und dann über Umlenkrollen 21 geführt, die ortsfest an dem Rahmen 19 angebracht sind. In der bezüglich der Ziehrichtung des Werkstücks austrittsseitigen Stirnseite der Hohlwellenlagerung sind Durchführungen 17 vorhanden, durch die die Fasern 5 von den Faserspulen kommend zur - nicht dargestellten - Führungseinrichtung und über diese auf das Werkstück gelenkt werden. Bei diesem Beispiel werden die Fasern 5 mittels der Umlenkrollen 21 außerhalb der Hohlwelle 13 zur Führungseinrichtung geführt.

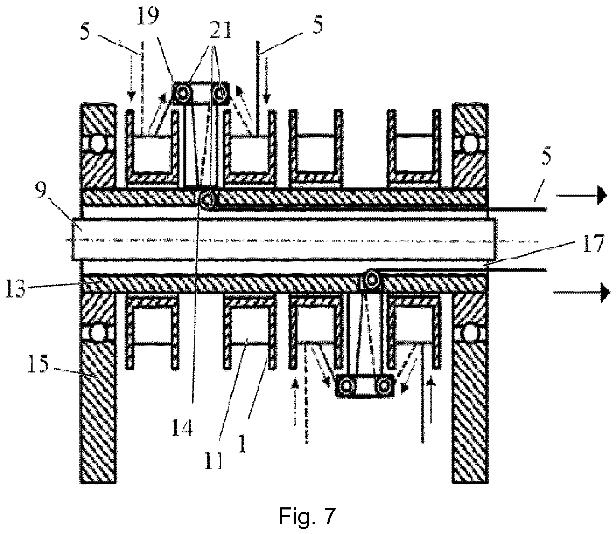

In Fig. 7 ist ein Beispiel einer weiteren erfindungsgemäßen Anordnung mit vier Faserspulen 1 wiedergegeben. Eine Hohlwelle 13, durch die das Werkstück 9 in Pfeilrichtung gezogen wird, ist in einem Lagerbock 15 drehbar gelagert. Auf der Hohlwelle 13 sind vier Faserspulen 1 angeordnet, die einzeln relativ zur Hohlwelle 13 drehbar sind. Die von den jeweiligen sich auf den Faserspulen befindlichen Faservorräten 11 kommenden Fasern 5 werden über Umlenkrollen 21 geführt, die ortsfest an einem Rahmen 19 angebracht sind. Bei dieser Ausführungsform der erfindungsgemäßen Vorrichtung werden die Fasern zunächst schräg nach außen von den Faserspulen 1 abgewickelt, dort an den Umlenkrollen 21 zunächst wiederum nach innen zwischen zwei benachbarte Faserspulen 1 umgelenkt, dann an einer weiteren Umlenkrollen 21 in Öffnungen 14 der Hohlwelle 13 umgelenkt und schließlich entlang einer Innenseite der Hohlwelle 13 in einem Spalt zwischen der Hohlwelle 13 und dem Werkstück 9 geführt. Mit anderen Worten werden die Fasern 5 von den Umlenkrollen 21 innerhalb der Hohlwelle 13 zur Führungseinrichtung geführt. Der Spalt dient dabei als Durchführung 17. Die Durchführung 17 erstreckt sich zu der in der bezüglich der Ziehrichtung des Werkstücks 9 austrittsseitigen Stirnseite der Hohlwellenlagerung, so dass auch hier durch die Durchführung 17 die Fasern 5 von den Faserspulen 1 kommend zur - nicht dargestellten - Führungseinrichtung und über diese auf das Werkstück gelenkt werden. Durch die Anordnung des Rahmens 19 zwischen jeweils zwei benachbarten Faserspulen 1 und dem Innenabzug des Fasern 5, ermöglicht diese Ausführungsform eine Zufuhr von Fasern 5 zu den Faserspulen 1 von außen, wie durch Pfeile angedeutet ist. Dadurch ermöglicht diese Ausführungsform ein gleichzeitiges Aufspulen und Abspulen auf unterschiedliche Faserspulen 1 oder ein Aufspulen aller Faserspulen 1 ohne Demontage der Faserspulen 1 von der Hohlwelle 13. Die Führung der Fasern 5 auf der Innenseite der Hohlwelle 13 erlaubt auch ein Bremsen der Faserspulen 1 von außen für eine Faserspannung, beispielsweise durch Backenbremse oder Keilriemen.

Fig. 8 zeigt eine vereinfachte schematische Darstellung einer Ausführungsform einer Tränkeinrichtung 22 und deren Funktionsweise. Die Tränkeinrichtung 22 ist zwischen den nicht dargestellten Faserspulen und der Führungseinrichtung angeordnet. Die von den Faserspulen kommenden Fasern 5 werden also separat getränkt, bevor sie über die Führungseinrichtung auf das Werkstück gelenkt werden. Die Tränkeinrichtung 22 lässt sich mit der Führungseinrichtung 7 kombinieren bzw. integrieren, so dass ein Ablegen der Fasern 5 auf dem Werkstück 9 unmittelbar nach dem Tränken erfolgen kann. Über eine Zuleitung 25 wird von außen kommend ein Tränkmittel 22a in die Tränkeinrichtung 22 eingebracht und benetzt die durch die Tränkeinrichtung 22 geführten Fasern 5 bevor diese auf das Werkstück 9 abgelegt werden.

Fig. 9 zeigt drei Varianten einer bevorzugten Ausführungsform einer Tränkeinrichtung 22 der erfindungsgemäßen Vorrichtung jeweils im Längsschnitt, wie sie bei der Ausführungsform der Fig. 8 verwendet werden können. Die Tränkeinrichtung 22 ist zwischen den nicht dargestellten Faserspulen und Führungseinrichtung angeordnet. Die von den Faserspulen kommenden Fasern 5 werden also getränkt, bevor sie über die Führungseinrichtung auf das Werkstück gelenkt werden. Die drei Varianten der Tränkeinrichtung 22 umfassen einen äußeren Grundkörper 23 sowie einen Innenkörper 27, der gegenüber dem Grundkörper 23 drehbar ist.

Bevorzugt ist der Innenkörper 27 mit der Hohlwelle 13 verbunden, sodass er sich mit dieser dreht. In den rechts und in der Mitte dargestellten Varianten ist der Grundkörper 23 ortsfest, wohingegen in der links dargestellten Variante auch der Grundkörper 23 drehbar gelagert ist. Im Längsprofil weist der Grundkörper 23 an den Stirnseiten einen kleineren Innenquerschnitt auf als in der Mitte. Wie in den Zeichnungen schematisch angedeutet, ist das Längsprofil des Grundkörpers 23 der Größe und Form des Innenkörpers 27 angepasst, sodass sich zwischen dem Grundkörper und dem Innenkörper ein Spalt ergibt. Über eine Zuleitung 25 wird in allen Fällen ein Tränkmittel 22a in die Tränkeinrichtung 22 eingebracht, vorzugsweise in den Spalt zwischen Grundkörper 23 und Innenkörper 27. Bei der Variante links erfolgt die Zufuhr des Tränkmittels 22a über die Zuleitung 25 in axialer Richtung bezüglich der Strangachse des Werkstücks 9. Bei der Variante in der Mitte erfolgt die Zufuhr des Tränkmittels 22a über die Zuleitung 25 in radialer Richtung bezüglich der Strangachse des Werkstücks 9. Bei der Variante rechts ist die Zuleitung 25 in dem äußeren Grundkörper 23 in Umfangsrichtung so angeordnet, dass eine Zufuhr des Tränkmittels 22a in Umfangsrichtung um den Innenkörper 27 erfolgt. Überschüssiges Tränkmittel 22a kann über einen Ablauf 24 aus der Tränkeinrichtung 22 abgeführt werden.

Die Fasern 5 werden über erste Umlenkungen 21a auf den Innenkörper 27, durch den Spalt und weiter zur Führungseinrichtung geführt. Die austrittsseitige Umlenkung kann beispielsweise wie in der links dargestellten Variante durch eine entsprechende Formgebung des Grundkörpers 23 erfolgen oder wie in der rechts und in der Mitte dargestellten Variante über zweite Umlenkungen 21b. Aufgrund der rotatorischen Bewegung des Innenkörpers 27 bildet sich nach Zuleitung des Tränkmittels 22a in dem Spalt ein Tränkmittelfilm, der vorzugsweise die gesamte Mantelfläche des Innenkörpers 27 wie auch die darauf gleitenden Fasern 5 benetzt. Da die Fasern 5 direkt über diese Mantelfläche geführt sind, nehmen die Fasern 5 auf ihrem Weg durch die Tränkeinrichtung 22 Tränkmittel 22a auf. Der Innenkörper 27 übernimmt auch die Aufgabe die Fasern 5 zu spreizen, während sie im Spalt benetzt werden.

Fig. 10 zeigt eine weitere Variante einer bevorzugten Ausführungsform einer Tränkeinrichtung 22 der erfindungsgemäßen Vorrichtung in jeweils teilgeschnittener Längsansicht (links) und Draufsicht (rechts), wie sie bei der Ausführungsform der Fig. 8 verwendet werden kann. Wie die Tränkeinrichtungen 22 gemäß Fig. 9 ist auch die in Fig. 10 dargestellte Tränkeinrichtung 22 zwischen den nicht dargestellten Faserspulen und Führungseinrichtung angeordnet. Auf der Hohlwelle 13, durch die das Werkstück 9 geführt ist, sind Tränkrollen 29 befestigt, deren Drehachse senkrecht zur Strangachse verläuft. Um die Hohlwelle 13 mit den Tränkrollen 29 herum ist ein feststehender Grundkörper 23 der Tränkeinrichtung 22 angeordnet. Im Längsprofil weist der Grundkörper 23 an den Stirnseiten einen kleineren Innenquerschnitt auf als in der Mitte. Wie im Längsschnitt (links) erkennbar, ist das Längsprofil des Grundkörpers 23 der Größe und Form der Tränkrollen 29 angepasst, sodass sich zwischen dem Grundkörper 23 und den Tränkrollen 29 ein Spalt ergibt, der vorzugsweise gleichmäßig ausgebildet ist. In diesen Spalt wird über eine im Grundkörper vorhandene Zuleitung 25 Tränkmittel eingebracht.

Die Fasern 5 werden über erste Umlenkungen 21a auf die Tränkrollen 29 und von dort über zweite Umlenkungen 21b zur Führungseinrichtung geführt. Die Umlenkungen bewirken eine Faserspannung, die ihrerseits eine Drehung der Tränkrollen 29 verursacht. Die Tränkrollen 29 müssen daher nicht aktiv angetrieben werden. In Drehrichtung der Tränkrollen 29 befinden sich am Austritt des Spaltes, der zwischen Tränkrollen 29 und Innenoberfläche des Grundkörpers 23 gebildet ist, Abstreifer 31. Zur Benetzung der Fasern mit dem Tränkmittel 22a wird dieses über die Zuleitung 25 in den Spalt eingebracht. Da sich die Tränkrollen 29 mit der Hohlwelle 13 mitdrehen, bildet sich aufgrund der Fliehkräfte ein Tränkmittelfilm innerhalb des Spaltes zum Grundkörper 23. Die Tränkrollen nehmen aus diesem Film Tränkmittel auf und transportieren es in Richtung des Spaltaustritts. Dort sorgen die Abstreifer 31 für eine gleichmäßige Belegung der Tränkrollen 29 mit dem Tränkmittel 22a, das anschließend auf die über die Rollen geführten Fasern 5 übertragen wird.

Fig. 11 zeigt eine vereinfachte schematische Darstellung einer weiteren Ausführungsform einer Tränkeinrichtung 22 und deren Funktionsweise. Die Tränkeinrichtung 22 ist in Ziehrichtung des Werkstücks 9 vor den Faserspulen 1 und der im Prinzip dargestellten Führungseinrichtung angeordnet. Die von den Faserspulen 1 kommenden Fasern 5 werden also getränkt, nachdem sie über die Führungseinrichtung auf das Werkstück 9 gelenkt werden. Die Tränkeinrichtung 22 weist einen Grundkörper 23 mit einer Zuleitung 25 für das Tränkmittel 22a auf. Die Tränkeinrichtung 22 lässt sich in der Führungseinrichtung 7 so integrieren, dass das Werkstück 9 mit dem Tränkmittel 22a benetzt wird und die trockenen Fasern 5 auf das bereits getränkte Werkstück 9 abgelegt werden. Über die Zuleitung 25 wird von außen kommend ein Tränkmittel 22a in die Tränkeinrichtung 22 eingebracht und benetzt das durch die Tränkeinrichtung 22 geführte Werkstück 9 vor dem Ablegen der Fasern 5. Mit anderen Worten befindet sich die Tränkeinrichtung 22 in Ziehrichtung des Werkstücks 9 vor einem Ablagepunkt der Faser 5 auf der Oberfläche des Werkstücks 9. Die Fasern 5 werden dadurch nach Ablage von innen her getränkt.

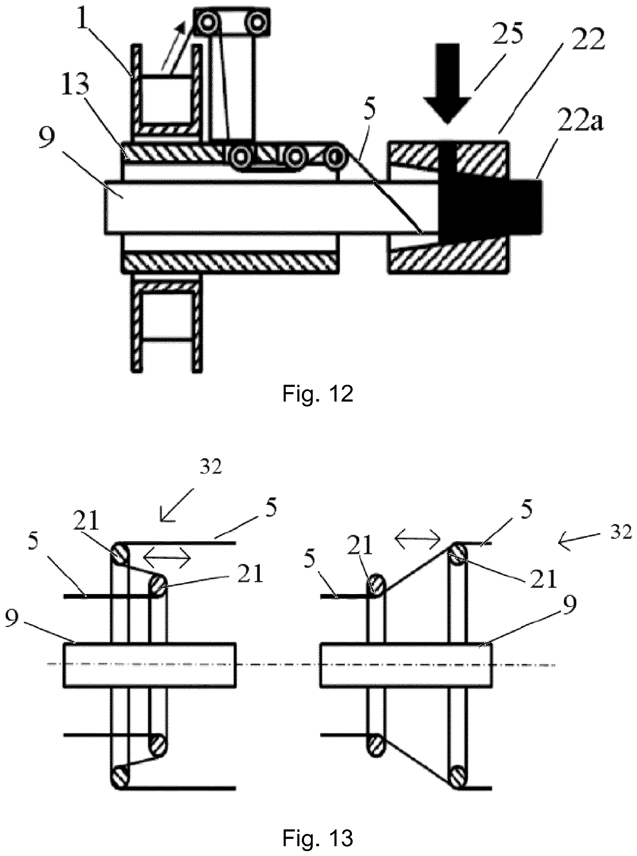

Fig. 12 zeigt eine vereinfachte schematische Darstellung einer weiteren Ausführungsform einer Tränkeinrichtung 22 und deren Funktionsweise. Die Tränkeinrichtung 22 ist nach den Faserspulen 1 und der im Prinzip dargestellten Führungseinrichtung angeordnet. Die von den Faserspulen 1 kommenden trockenen Fasern 5 werden also getränkt, nachdem sie über die Führungseinrichtung auf das Werkstück 9 gelenkt werden. Die Tränkeinrichtung 22 weist einen Grundkörper 23 mit einer Zuleitung 25 für das Tränkmittel 22a auf. In Fig. 12 ist nur das Aufbringen des Tränkmittels 22a dargestellt, um die Funktionsweise zu verdeutlichen. Die Tränkeinrichtung 22 lässt sich nach der Führungseinrichtung 7 so integrieren, dass die bereits auf dem trockenen Werkstück 9 abgelegten Fasern 5 mit dem Tränkmittel 22a benetzt werden. Über die Zuleitung 25 wird von außen kommend ein Tränkmittel 22a in die Tränkeinrichtung 22 eingebracht und benetzt das durch die Tränkeinrichtung 22 geführte Werkstück 9 nach dem Ablegen der Fasern 5. Mit anderen Worten befindet sich die Tränkeinrichtung 22 in Ziehrichtung des Werkstücks 9 nach einem Ablagepunkt der Faser 5 auf der Oberfläche des Werkstücks 9. Die Fasern 5 werden dadurch nach Ablage von außen her getränkt.

Fig. 13 zeigt schematisch zwei mögliche Stellungen einer Bremse 32 zur Bildung bzw. Aufrechterhaltung der Faserspannung. Die Faserspannung kann durch Umlenken der Fasern 5 und die damit verbundene Reibung erzeugt werden. Bei beiden Stellungen sind die Fasern 5 dargestellt, bevor sie auf das Werkstück 9 durch die Führungseinrichtung 7 gelenkt werden. Bei der Stellung links wird die Faserspannung durch zweimaliges Umlenken um 180 ° an zwei Umlenkungen 21 erzeugt. Bei der Stellung rechts wird die Faserspannung durch zweimaliges Umlenken in entgegengesetzten Winkeln von +45 ° und -45 ° an zwei Umlenkungen 21 erzeugt. Die Stellung rechts erzeugt eine niedrige Faserspannung und die Stellung links erzeugt eine hohe Faserspannung. Die Faserspannung ist dabei durch axiales Verschieben der Umlenkungen relativ zueinander stufenlos veränderbar. Grundsätzlich kann die Faserspannung auch durch Bremsen der Faserspule 1 von innen auf der Hohlwelle 13 oder von außen mittels eines Zahnrads oder Riemens erzeugt werden.

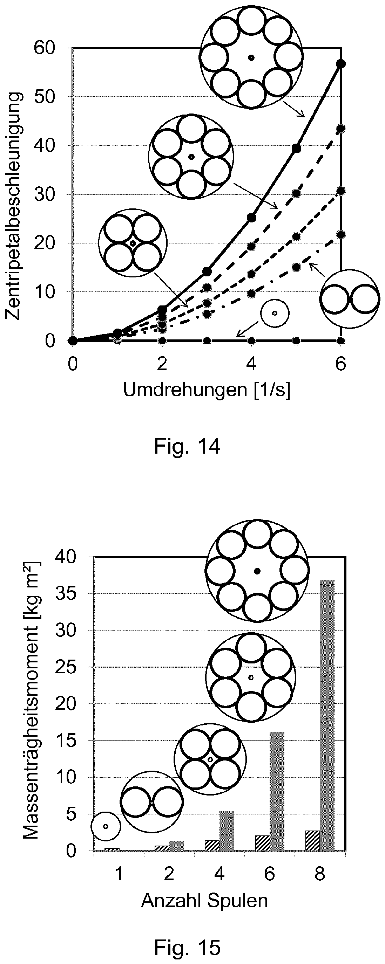

Die Fig. 14 und 15 verdeutlichen die Vorteile, die die erfindungsgemäße Vorrichtung gegenüber bekannten Pullwinding-Anlagen mit einem Karussell an Faserspulen aufweisen. In Fig. 14 ist die Zentripetalbeschleunigung (normiert auf die Erdbeschleunigung) über die Drehzahl für unterschiedliche Konfigurationen an Faserspulen aufgetragen. Die Zahlenangabe auf der Ordinatenachse entspricht also dem jeweiligen Vielfachen der Erdbeschleunigung. Bei bekannten Pullwinding-Anlagen steigt die Zentrifugalkraft mit zunehmender Anzahl an Faserspulen und mit zunehmender Drehzahl stark an. Das ist darin begründet, dass die Faserspulen auf den Karusseilen bezüglich der Strangachse exzentrisch angeordnet sind, und die Zentripetalbeschleunigung maßgeblich vom Abstand der Massepunkte zur Drehachse abhängt.

Die dargestellten Werte ergeben sich für folgende Konfiguration: Standard-Glasfaserspulen mit einem Spulenaußendurchmesser von 30 cm sind gleichmäßig und so eng wie möglich auf einer Kreisbahn auf einem Karussell verteilt angeordnet, und zwar in der jeweils grafisch angegebenen Anzahl von 1, 2, 4, 6 und 8 Faserspulen. Aufgrund dieser Anordnung ergibt sich ein Radius R dieser Kreisbahn, der im Zusammenspiel mit der Rotationsfrequenz (Anzahl an Umdrehungen) n die Zentripetalbeschleunigung nach folgender Formel bestimmt:

$$a_{zp} = 4 * \pi^2 * n^2 * R$$

Normiert auf die Erdbeschleunigung ergibt sich beispielsweise für eine Anordnung mit sechs Faserspulen (zweite Kurve von oben) bei einer Rotationsfrequenz von 4 Umdrehungen pro Sekunde eine ca. 19-fache Erdbeschleunigung.

Bei einer erfindungsgemäßen Vorrichtung hingegen ist die Zentripetalbeschleunigung gleich null, unabhängig von der Anzahl der koaxial hintereinander angeordneten Faserspulen.

Fig. 15 zeigt einen Vergleich der Massenträgheitsmomente, die sich bei einer Rotation der Faserspulen um die Strangachse einstellen. Die schraffierten Blöcke geben die Werte für die erfindungsgemäße Vorrichtung wieder, die grauen Blöcke die Werte für aus dem Stand der Technik bekannte Karussell-Vorrichtungen, jeweils bei gleicher Anzahl an Faserspulen. Die auf der Ordinatenachse angegebenen Zahlenwerte beziehen sich auf Anordnungen mit Faserspulen mit einem Spulenaußendurchmesser von 30 cm und einer Masse von 30 kg pro Faserspule. Je höher die Anzahl an Faserspulen und damit der Herstellkapazität der Anlage, umso deutlicher fällt der Vorteil der erfindungsgemäßen Vorrichtung aus. Als Konsequenz lässt sich die neue Anlage besser beschleunigen und bremsen als eine herkömmliche Anlage.

**Patentansprüche**

1. Vorrichtung zur Fertigung eines faserverstärkten Strangprofils umfassend eine Zieheinrichtung (10) zum Ziehen eines strangförmigen Werkstückes (9) durch die Vorrichtung, mindestens eine um die Strangachse drehbar angeordnete Faserspule (1), die einen Spulenkern aufweist, um den eine Faser (5) gewickelt ist, wobei die Faser (5) dazu vorgesehen ist, auf der Oberfläche des Werkstücks (9) abgelegt zu werden, mindestens eine um die Strangachse drehbar angeordnete Führungseinrichtung (7), die die von der Faserspule (1) abgewickelte Faser (5) auf das Werkstück (9) lenkt, wobei der Spulenkern der Faserspule (1) eine Durchgangsbohrung aufweist, durch die das Werkstück (9) geführt ist, und eine Tränkeinrichtung (22), die Mittel zur Benetzung der Fasern (5) mit einem Tränkmittel (22a), insbesondere einer Flüssigkeit, aufweist.

2. Vorrichtung nach Anspruch 1, wobei mindestens zwei Faserspulen (1) mit Durchgangsbohrungen entlang der Strangachse hintereinander angeordnet sind, und wobei eine Umlenkeinrichtung (21) vorhanden ist, über die die von den jeweiligen Faserspulen (1) abgewickelten Fasern (5) zur Führungseinrichtung (7) geführt sind.

3. Vorrichtung nach Anspruch 1 oder 2, wobei die mindestens eine Faserspule (1) oder mehrere Faserspulen (1) auf einer antreibbaren Hohlwelle (13) angeordnet sind, und das Werkstück (9) durch die Hohlwelle (13) geführt ist.

4. Vorrichtung nach Anspruch 3, wobei die Umlenkeinrichtung (21) ausgebildet ist, die von den jeweiligen Faserspulen (1) abgewickelten Fasern (5) innerhalb der Hohlwelle (13) zur Führungseinrichtung (7) zu führen.

5. Vorrichtung nach Anspruch 3, wobei die Umlenkeinrichtung (21) ausgebildet ist, die von den jeweiligen Faserspulen (1) abgewickelten Fasern (5) außerhalb der Hohlwelle (13) zur Führungseinrichtung (7) zu führen.

6. Vorrichtung nach einem der Ansprüche 3 bis 5, wobei sich innerhalb der Hohlwelle (13) ein Schutzrohr befindet, durch das das Werkstück (9) geführt ist.

7. Vorrichtung nach einem der Ansprüche 3 bis 6, wobei die Führungseinrichtung (7) fest mit der Hohlwelle (13) verbunden ist, sodass bei einer Drehung der Hohlwelle (13) die Winkelgeschwindigkeit der Führungseinrichtung (7) derjenigen der Hohlwelle (13) entspricht.

8. Vorrichtung nach einem der Ansprüche 1 bis 7, wobei die Tränkeinrichtung (22) zwischen der mindestens einen Faserspule (1) und der Führungseinrichtung (7) um die Strangachse drehbar angeordnet ist und Mittel zur Führung der Fasern durch die Tränkeinrichtung aufweist.

9. Vorrichtung nach einem der Ansprüche 1 bis 7, wobei die Tränkeinrichtung (22) in Ziehrichtung des Werkstücks (9) vor einem Ablagepunkt der Faser (5) auf der Oberfläche des Werkstücks (9) angeordnet ist.

10. Vorrichtung nach einem der Ansprüche 1 bis 7, wobei die Tränkeinrichtung (22) in Ziehrichtung des Werkstücks (9) nach einem Ablagepunkt der Faser (5) auf der Oberfläche des Werkstücks (9) angeordnet ist.

11. Strangwickelanlage umfassend mindestens zwei Vorrichtungen gemäß einem der Ansprüche 1 bis 10, die modular hintereinander angeordnet sind, sodass ein aus der ersten Vorrichtung austretendes strangförmiges Werkstück durch die zweite Vorrichtung geführt wird, und wobei die Strangwickelanlage mindestens eine Zieheinrichtung zum Ziehen eines strangförmigen Werkstückes aufweist.

12. Strangwickelanlage gemäß Anspruch 11, wobei aufeinander folgende Vorrichtungen derart eingerichtet sind, dass die Drehrichtung der jeweiligen Führungseinrichtungen und/oder das Verhältnis zwischen Winkelgeschwindigkeit und axialer Geschwindigkeit des Werkstücks identisch oder unterschiedlich sind.

13. Strangwickelanlage gemäß Anspruch 12, wobei mindestens eine Umlenkvorrichtung zwischen zwei Vorrichtungen angeordnet ist, die das aus der ersten Vorrichtung austretende Werkstück umlenkt, sodass die Strangachse der zweiten Vorrichtung nicht parallel zur Strangachse der ersten Vorrichtung ist.

14. Verfahren zur Herstellung eines faserverstärkten Strangprofils, bei dem ein strangförmiges Werkstück (9) mittels einer Zieheinrichtung durch eine Vorrichtung gezogen wird, mindestens eine Faser (5) vom Spulenkern mindestens einer drehbar um die Strangachse angeordneten Faserspule (1) abgewickelt wird und von der Faserspule (1) kommend über mindestens eine drehbar um die Strangachse angeordnete Führungseinrichtung (7) auf das Werkstück (9) gelenkt und auf dem Werkstück abgelegt wird, wobei das Werkstück durch eine Durchgangsbohrung im Spulenkern der mindestens einen Faserspule (1) geführt wird und mittels einer Tränkeinrichtung (22) mit einem Tränkmittel (22a), insbesondere einer Flüssigkeit, benetzt wird.

## Claims

1.  A device for producing a fiber-reinforced pultruded profile, comprising
    a pulling installation (10) for pulling a strand-shaped workpiece (9) through the device,
    at least one fiber spool (1) which is disposed so as to be rotatable about the strand axis and which has a spool core around which a fiber (5) is wound, wherein the fiber (5) is provided for being deposited on the surface of the workpiece (9), at least one guide installation (7) which is disposed so as to be rotatable about the strand axis and which directs the fiber (5) unwound from the fiber spool (1) onto the workpiece (9), wherein the spool core of the fiber spool (1) has a through bore by way of which the workpiece (9) is guided, and
    a soaking installation (22) which has means for wetting the fibers (5) with a soaking means (22a), in particular a liquid.

2.  The device according to claim 1, wherein at least two fiber spools (1) having through bores are disposed behind one another along the strand axis, and wherein a deflection installation (21), by way of which the fibers (5) unwound from the respective fiber spools (1) are guided to the guide installation (7), is present.

3.  The device according to claim 1 or 2, wherein the at least one fiber spool (1) or a plurality of fiber spools (1) are disposed on a drivable hollow shaft (13), and the workpiece (9) is guided through the hollow shaft (13).

4.  The device according to claim 3, wherein the deflection installation (21) is configured for guiding within the hollow shaft (13) fibers (5) unwound from the respective fiber spools (1) to the guide installation (7).

5.  The device according to claim 3, wherein the deflection installation (21) is configured for guiding outside the hollow shaft (13) fibers (5) unwound from the respective fiber spools (1) to the guide installation (7).

6.  The device according to one of claims 3 to 5, wherein a protective tube through which the workpiece (9) is guided is situated within the hollow shaft (13).

7.  The device according to one of claims 3 to 6, wherein the guide installation (7) is fixedly connected to the hollow shaft (13) such that the angular velocity of the guide device (7) in a rotation of the hollow shaft (13) corresponds to that of the hollow shaft (13).

8.  The device according to one of claims 1 to 7, wherein the soaking installation (22) is disposed between the at least one fiber spool (1) and the guide installation (7) so as to be rotatable about the strand axis and has means for guiding the fibers through the soaking installation.

9.  The device according to one of claims 1 to 7, wherein the soaking installation (22) in the pulling direction of the workpiece (9) is disposed ahead of a depositing point of the fibers (5) on the surface of the workpiece (9).

10. The device according to one of claims 1 to 7, wherein the soaking installation (22) in the pulling direction of the workpiece (9) is disposed behind a depositing point of the fibers (5) on the surface of the workpiece (9).

11. A strand winding plant comprising at least two devices according to one of claims 1 to 10, which are disposed in a modular manner behind one another such that a strand-shaped workpiece exiting the first device is guided through the second device, and wherein the strand winding plant has at least one pulling installation for pulling a strand-shaped workpiece.

12. The strand winding plant according to claim 11, wherein mutually successive devices are specified in such a manner that the rotating direction of the respective guide installations and/or the ratio between the angular velocity and an axial speed of the workpiece are identical or dissimilar.

13. The strand winding plant according to claim 12, wherein at least one deflection device which deflects the workpiece exiting the first device such that the strand axis of the second device is not parallel to the strand axis of the first device is disposed between two devices.

14. A method for producing a fiber-reinforced pultruded profile, in which method a strand-shaped workpiece (9) by means of a pulling installation is pulled through a device, at least one fiber (5) is unwound from the spool core of at least one fiber spool (1) that is disposed so as to be rotatable about the strand axis, and coming from the fiber spool (1), is directed by way of at least one guide installation (7) that is disposed so as to be rotatable about the strand axis onto the workpiece (9) and is deposited on the workpiece, wherein the workpiece is guided by way of a through bore in the spool core of the at least one fiber spool (1), and by means of a soaking installation (22) is soaked with a soaking means (22a), in particular a liquid.

**Revendications**

1. Dispositif de fabrication d'un profilé en barre renforcé par des fibres, le dispositif comprenant un moyen de tirage (10) destiné à tirer une pièce (9) en forme de barre à travers le dispositif, au moins une bobine de fibres (1) disposée de manière rotative autour de l'axe de barre et comportant un noyau de bobine autour duquel une fibre (5) est enroulée, la fibre (5) étant prévue pour être déposée sur la surface de la pièce (9), au moins un moyen de guidage (7) disposé de manière rotative sur l'axe de barre et déviant la fibre (5) déroulée de la bobine de fibres (1) vers la pièce (9), le noyau de la bobine de fibress (1) comportant un trou traversant à travers lequel la pièce (9) est guidée, et un moyen d'imprégnation (22) comportant des moyens destinés à imprégner les fibres (5) avec un agent d'imprégnation (22a), en particulier un liquide.

2. Dispositif selon la revendication 1, au moins deux bobines de fibres (1) pourvues de trous traversants étant disposées l'une derrière l'autre le long de l'axe de barre, et un dispositif de déviation (21) étant présent, lequel permet de guider les fibres (5), déroulées des bobines de fibres (1) respectives, en direction du moyen de guidage (7).

3. Dispositif selon la revendication 1 ou 2, l'au moins une bobine de fibress (1) ou une pluralité de bobines de fibres (1) étant disposées sur un arbre creux entraînable (13) et la pièce (9) étant guidée à travers l'arbre creux (13).

4. Dispositif selon la revendication 3, le moyen de déviation (21) étant conçu pour guider les fibres (5), déroulées des bobines de fibres (1) respectives, à l'intérieur de l'arbre creux (13) en direction du moyen de guidage (7).

5. Dispositif selon la revendication 3, le moyen de déviation (21) étant conçu pour guider les fibres (5), déroulées des bobines de fibres (1), à l'extérieur de l'arbre creux (13) en direction du moyen de guidage (7) .

6. Dispositif selon l'une des revendications 3 à 5, un tube de protection, à travers lequel est guidée la pièce (9), se trouvant à l'intérieur de l'arbre creux (13) .

7. Dispositif selon l'une des revendications 3 à 6, le moyen de guidage (7) étant relié de manière fixe à l'arbre creux (13) de manière à ce que, lors de la rotation de l'arbre creux (13), la vitesse angulaire du moyen de guidage (7) corresponde à celle de l'arbre creux (13).

8. Dispositif selon l'une des revendications 1 à 7, le moyen d'imprégnation (22) étant disposé de manière à pouvoir tourner sur l'axe de barre entre l'au moins une bobine de fibress (1) et le moyen de guidage (7) et comprenant des moyens de guidage des fibres à travers le moyen d'imprégnation.

9. Dispositif selon l'une des revendications 1 à 7, le moyen d'imprégnation (22) étant disposé sur la surface de la pièce (9) en avant d'un point de dépôt de la fibre (5) par référence à la direction de tirage de la pièce (9).

10. Dispositif selon l'une des revendications 1 à 7, le moyen d'imprégnation (22) étant disposé sur la surface de la pièce (9) en aval d'un point de dépôt de la fibre (5) par référence à la direction de tirage de la pièce (9).

11. Système d'enroulement de barre comprenant au moins deux dispositifs selon l'une des revendications 1 à 10, qui sont disposés de manière modulaire l'un derrière l'autre, de manière à ce qu'une pièce en forme de barre, sortant du premier dispositif, soit guidée à travers le deuxième dispositif et le système d'enroulement de barre comportant au moins un dispositif de tirage destiné à tirer une pièce en forme de barre.

12. Système de bobinage sur barre selon la revendication 11, des dispositifs successifs étant adaptés de manière à ce que le sens de rotation des moyens de guidage respectifs et/ou le rapport entre la vitesse angulaire et la vitesse axiale de la pièce soient identiques ou différents.

13. Système de bobinage sur barre selon la revendication 12, au moins un moyen de déviation étant disposé entre deux dispositifs, lequel moyen de déviation dévie la pièce sortant du premier dispositif de manière à ce que l'axe de barre du deuxième dispositif ne soit pas parallèle à l'axe de barre du premier dispositif.

14. Procédé de fabrication d'un profilé en barre renforcé par des fibres, dans lequel une pièce (9) en forme de barre est tirée par un moyen de tirage à travers un dispositif, au moins une fibre (5) est déroulée du noyau d'au moins une bobine de fibress (1) rotative sur l'axe de barre set est déviée depuis la bobine de fibress (1) vers la pièce (9) par au moins un moyen de guidage (7) disposé de manière rotative sur l'axe de barre et est déposée sur la pièce, la pièce étant guidée à travers un trou traversant ménagé dans le noyau de l'au moins une bobine de fibress (1) et est imprégnée avec un agent d'imprégnation (22a), en particulier un liquide, à l'aide d'un moyen d'imprégnation (22).

Stand der Technik

Fig. 1

Stand der Technik

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 3641812 B